Europäisches Patentamt

European Patent Office

Office européen des brevets

(19)

(11) Veröffentlichungsnummer : **0 261 350 B1**

(12)     **EUROPÄISCHE PATENTSCHRIFT**

(45) Veröffentlichungstag der Patentschrift :
10.04.91 Patentblatt 91/15

(51) Int. Cl.⁵ : **B29C 45/16, B29C 67/22**

(21) Anmeldenummer : 87111027.6

(22) Anmeldetag : 30.07.87

(54) Vorrichtung zur Herstellung von Kunststoff-Formkörpern.

(30) Priorität : 23.09.86 DE 3632185

(43) Veröffentlichungstag der Anmeldung :
30.03.88 Patentblatt 88/13

(45) Bekanntmachung des Hinweises auf die
Patenterteilung :
10.04.91 Patentblatt 91/15

(84) Benannte Vertragsstaaten :
AT BE CH DE ES FR GB IT LI LU NL SE

(56) Entgegenhaltungen :
DE-A- 2 259 818
DE-A- 3 247 000
DE-A- 3 305 931
DE-U- 8 034 352
FR-A- 2 217 147

(73) Patentinhaber : **Battenfeld GmbH
Scherl 10
W-5882 Meinerzhagen (DE)**

(72) Erfinder : **Ehhritt, Jürgen
Auf der Platte 3
W-5912 Hilchenbach-Müsen (DE)**

(74) Vertreter : **Müller, Gerd et al
Patentanwälte
HEMMERICH-MÜLLER-GROSSE-POLLMEIER-MEY
Hammerstrasse 2
W-5900 Siegen 1 (DE)**

EP 0 261 350 B1

**Beschreibung**

Die Erfindung betrifft eine Vorrichtung zur Herstellung von Kunststoff-Formkörpern mit einer Außenhaut vorzugsweise aus treibmittelfreiem Kunststoff und mit einem Kern, vorzugsweise porigen Kern aus treibmittelhaltigem Kunststoff, bestehend aus einem Spritzkopf mit einem in eine Ausspritzöffnung übergehenden Hauptkanal, zwei mit axialem Abstand von der Ausspritzöffnung und voneinander sowie gegeneinander winkelversetzt in den Hauptkanal mündenden Zuführkanälen für die beiden Kunststoffe sowie einer axial im Hauptkanal verschiebbaren Schließnadel, mit der die beiden Zuführkanäle vom Hauptkanal abtrennbar sind, wobei in der Schließnadel ein im wesentlichen in axialer Richtung verlaufender Verbindungskanal angeordnet ist, der einerseits aus der Stirnfläche und andererseits radial zum entfernteren Zuführkanal hin aus dem Umfang der Schließnadel herausführt.

Ein Spritzkopf dieser Art ist bereits bekannt durch die DE-OS 32 47 000. Dieser Spritzkopf zeichnet sich dabei nicht nur dadurch aus, daß der in der Schließnadel vorgesehene Verbindungskanal – in der geschlossenen Stellung der Schließnadel und in axialer Richtung von der Ausspritzöffnung aus gesehen – radial vor dem entfernteren Zuführkanal aus der Schließnadel austritt. Vielmehr ist er auch noch dadurch gekennzeichnet, daß die vordere Kante der inneren radialen Austrittsöffnung des Verbindungskanals von der freien Stirnfläche der Schließnadel einen Abstand aufweist, der einerseits größer als der kleinste axiale Abstand zwischen der Vorderkante des vorderen Zuführkanals und der Vorderkante des hinteren Zuführkanals und andererseits kleiner als der größte axiale Abstand zwischen der Vorderkante des vorderen Zuführkanals und der Hinterkante des hinteren Zuführkanals ist.

Hierdurch wird gegenüber anderen, bspw. durch das DE-GM 80 34 352 ebenfalls bekannten Spritzköpfen der Vorteil erreicht, daß unter Verringerung des Herstellungsaufwandes für den Spritzkopf beim Spritzvorgang ein kontinuierlicher Übergang von der einen Kunststoffmasse auf die andere Kunststoffmasse und umgekehrt ohne die Benutzung besonderer Absperrvorrichtungen möglich ist. Auch können einerseits treibmittelfreie Kunststoffmassen und andererseits treibmittelhaltige Kunststoffmassen bei Bedarf ohne Benutzung besonderer Absperrvorrichtungen getrennt voneinander in die Form gespritzt werden.

Eine Unzulänglichkeit bei der gattungsgemäßen Vorrichtung zur Herstellung von Kunststoff-Formkörpern besteht darin, daß bei der Durchführung eines Spritzvorgangs mit dem treibmittelhaltigen Kunststoff nur dann ein sogenannter Nachdruck auf das bereits in der Form befindliche Kunststoffmaterial ausgeübt werden kann, wenn mit einem Zwischenstop im Zuführbereich für den treibmittelfreien Kunststoff gearbeitet, der Spritzkopf also mit einer besonderen Steuerung – auf Versiegeln – gefahren wird.

Es hat sich aber herausgestellt, daß aufgrund der aus dieser Steuerungsart resultierenden trägen Bewegungen die Reproduzierbarkeit des gewünschten Arbeitsergebnisses – Versiegeln – nicht immer gewährleistet ist.

Eine weitere Unzulänglichkeit bekannter Vorrichtungen zur Herstellung von Kunststoff-Formkörpern, wie sie bspw. durch die DE-PS 23 42 789 zum Stand der Technik gehören, liegt darin, daß als Folge des Nachdrückens mit treibmittelfreiem Kunststoff die betreffende Schließnadel das vor ihr befindliche Kunststoffmaterial in den Anguß drücken muß. Während dies bei relativ dickwandig geschäumten Formteilen noch ohne weiteres möglich ist, kann das bei dünnwandigen Formteilen nicht mehr erreicht werden, weil dort nämlich der Anguß zu diesem Zeitpunkt in der Regel bereits abgefroren ist.

Der Erfindung liegt die Aufgabe zugrunde, eine Vorrichtung zur Herstellung von Kunststoff-Formkörpern der eingangs spezifizierten Art so weiterzubilden, daß unter Beibehaltung einer kostengünstigen Herstellung das Nachdrücken mit treibmittelfreiem Kunststoff ermöglicht wird und das Verschließen des Hauptkanals mittels der Schließnadel bei geringer zu verschiebender Schmelzevolumina stattfinden kann. Zugleich wird eine optimale rheologische Auslegung des Spritzkopfes sowie auch die Möglichkeit des Arbeitens mit unterschiedlich temperierten Masseströmen aus verschiedenen Kunststoffen, bspw. aus treibmittelfreiem Kunststoff und treibmittelhaltigem Kunststoff angestrebt.

Erreicht wird das gesteckte Ziel nach der Erfindung grundsätzlich durch die Merkmale des Anspruchs 1, nämlich dadurch, daß die radiale Umfangsöffnung des Verbindungskanals sowohl in der geschlossenen Axialstellung als auch in zumindest einer teilweise geöffneten Axialstellung der Schließnadel auf etwa gleicher Höhe mit der inneren radialen Austrittsöffnung des entfernteren Zuführkanals liegt, und daß die Schließnadel bzw. deren radiale Umfangsöffnung in jeder Axialstellung um die Längsachse des Spritzkopfes relativ zur Austrittsöffnung winkelverdrehbar vorgesehen ist.

Der besondere Vorteil dieser Ausgestaltung liegt darin, daß die Zufuhr des zur Bildung der kompakten Außenhaut der Formteile dienenden, treibmittelfreien Kunststoffs mit Hilfe der Schließnadel unterbrochen werden kann, ohne daß hierbei eine Verdrängung der betreffenden Kunststoffmasse in den Anguß der Form stattfindet.

Ein weiterbildendes Erfindungsmerkmal liegt nach Anspruch 2 darin, daß die axiale Ausdehnung der radialen Umfangsöffnung des Verbindungskanals an der Schließnadel etwa gleich dem Doppelten der axialen Ausdehnung der Austrittsöffnung am zugehörigen Zuführkanal bemessen ist.

Zumindest über einen Teilabschnitt der Axialverschiebung der Schließnadel bleibt damit der Verbindungskanal derselben an den zugehörigen Zuführkanal angeschlossen. Währenddessen ist dann die Möglichkeit gegeben, gleichzeitig treibmittelhaltigen Kunststoff und treibmittelfreien Kunststoff in die mit dem Spritzkopf verbundene Form einzuspeisen.

Zur Optimierung der Arbeitsweise eines erfindungsgemäßen Spritzkopfes hat es sich bewährt, wenn gemäß Anspruch 3 der Verdrehwinkel der Schließnadel im Spritzkopf begrenzt ist. Damit kann der Verbindungskanal in der Schließnadel auf einfachste Art und Weise an den zugehörigen Zuführkanal angeschlossen bzw. von diesem abgetrennt werden.

Eine besonders einfache Bauart für den Spritzkopf wird erfindungsgemäß dann erreicht, wenn nach Anspruch 4 der Verbindungskanal mit seiner radialen Umfangsöffnung unmittelbar einstückig in die Schließnadel eingearbeitet ist. Andererseits könnte es sich aber in manchen Fällen aber auch als zweckmäßig erweisen, die Ausgestaltung nach Anspruch 5 vorzusehen, wonach nämlich die radiale Umfangsöffnung für den Verbindungskanal sich in einer Hülse befindet, die die Schließnadel an ihrem Umfang verdrehbar umfaßt. In diesem Falle braucht die Schließnadel selbst nur axial verschiebbar vorgesehen zu werden, während andererseits die die radiale Umfangsöffnung enthaltende Hülse lediglich verdrehbar im Gehäuse des Spritzkopfes sitzen kann.

In baulicher Hinsicht hat es sich bei der Erfindung bewährt, wenn nach Anspruch 6 der axiale Abstand zwischen den Mündungen der beiden Zuführkanäle in den Hauptkanal etwa doppelt so groß bemessen ist wie die axiale Ausdehnung der Mündungen dieser Zuführkanäle.

Nach Anspruch 7 ist erfindungsgemäß die Möglichkeit ins Auge gefaßt, daß Translations- und Rotationsbewegung der Schließnadel wahlweise gleichzeitig oder zueinander zeitversetzt ausführbar sind. Nach Anspruch 8 können aber auch Translations- und Rotationsbewegung der Schließnadel miteinander gekoppelt werden bzw. koppelbar sein.

Schließlich wird durch Anspruch 9 noch angeregt, daß die Schließnadel lediglich axial verschiebbar und die Hülse lediglich begrenzt winkelverdrehbar im gehäuse des Spritzkopfs angeordnet sind.

Die erfindungsgemäße Vorrichtung läßt sich sowohl als Maschinendüse als auch Düse für ein Heiß-Kanalsystem für das Mehrkomponenten-Spritzgießverfahren einsetzen.

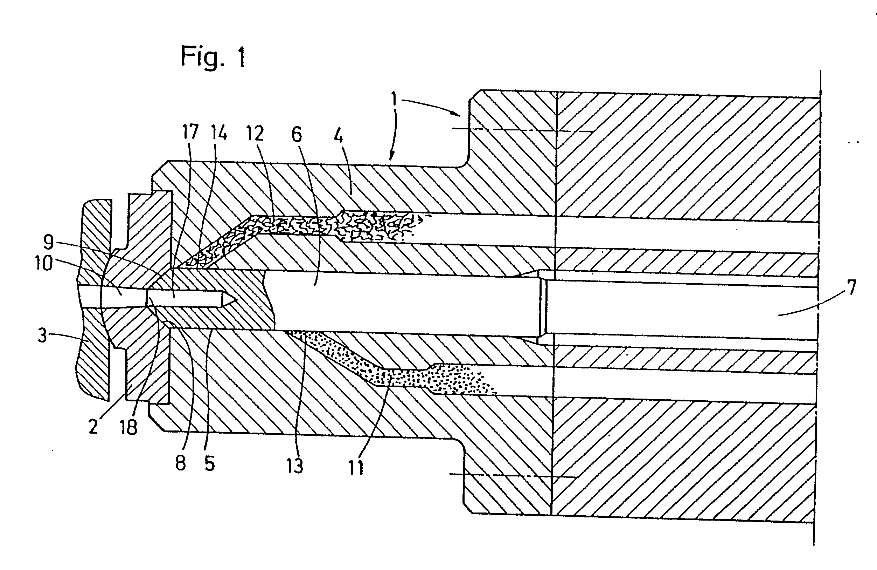

Die Erfindung wird nachfolgend anhand eines in der Zeichnung dargestellten Ausführungsbeispiels näher erläutert, wobei die Figuren 1 bis 6 jeweils im Längsschnitt den erfindungswesentlichen Bereich eines Spritzkopfs in Verschiedenen Funktionsstellungen zeigen.

In der Zeichnung ist von einer Vorrichtung zur Herstellung von Kunststoff-Formkörpern mit einer kompakten Außenhaut aus treibmittelfreiem Kunststoff und einem porigen Kern aus treibmittelhaltigem Kunststoff lediglich der Spritzkopf 1 gezeigt, der über sein Düsenmundstück 2 an die Angußbuchse 3 einer (nicht gezeigten) Spritzform angelegt ist.

Vom Düsenmundstück 2 aus erstreckt sich koaxial durch das Gehäuse 4 des Spritzkopfs 1 ein Hauptkanal 5, der eine Schließnadel 6 aufnimmt. Diese schließnadel 6 hat dabei einen nach hinten durch den Spritzkopf 1 geführten Schaft 7, an dem ein (nicht gezeigter) Verschiebeantrieb angreift, der bspw. durch Druckmittel, insbesondere hydraulisch, betätigt werden kann.

Das Ende der Schließnadel 6 ist mit einem Dichtkonus 8 ausgestattet, welcher mit einem entsprechen angepaßten Dichtkonus 9 im Düsenmundstück 2 in der vorgeschobenen Abdichtstellung der Schließnadel 6 zusammenwirkt, wie das die Fig. 1, 2, 5 und 6 deutlich erkennen lassen.

Mit einem größeren Abstand von dem eine Austrittsöffnung 10 enthaltenden Düsenmundstück 2 mündet unter einem vorgegebenen Winkel – bspw. von 30 bis 40° – ein Zuführkanal 11 in den Hauptkanal 5 des Gehäuses 4 ein, welcher an seinem aus dem Spritzkopf 1 nach hinten herausgeführten Ende mit einer (nicht gezeigten) Spritzeinheit in Verbindung steht.

Mit geringerem Abstand vom Düsenmundstück 2 mündet in den Hauptkanal 5 des Gehäuses 4 am Spritzkopf 1 ein weiterer Zuführkanal 12 ebenfalls unter einem vorgegebenen Winkel – bspw. zwischen 30 und 40° –. Auch dieser Zuführkanal 12 ist dabei vorzugsweise nach hinten aus dem Spritzkopf 1 herausgeführt und steht dort mit einer (nicht gezeigten) Spritzeinheit in Verbindung.

Die Mündungen 13 und 14 der beiden Zuführkanäle 11 und 12 in den Hauptkanal 5 befinden sich vorzugsweise an sich gegenüberliegenden Umfangsbereichen des Hauptkanals 5 und sind dabei gegeneinander um den Abstand 15 axial versetzt vorgesehen, welcher vorzugsweise etwa doppelt so groß bemessen ist, wie die axiale Ausdehnung der beiden Mündungsöffnungen 13 und 14 der Zuführkanäle 11 und 12.

Das Ausmaß 16 der möglichen Axialverschiebung für die Schließnadel 6 ist mindestens so groß gewählt, daß der Querschnitt der Mündungsöffnung 14 des Zuführkanals 12 in den Hauptkanal 5 einerseits vollständig geschlossen (Fig. 1, 2 und 5, 6) werden kann, während er sich andererseits aber auch nahezu vollständig freigeben läßt (Fig. 3 und 4).

Koaxial zur Längsachse ist in die Schließnadel 6 ein Verbindungskanal 17 eingearbeitet, wobei sich dessen Mündungsöffnung 18 am freien Ende der Schließnadel 6 in Achsfluchtlage mit der Ausspritzöffnung 10 des Düsenmundstücks 2 befindet.

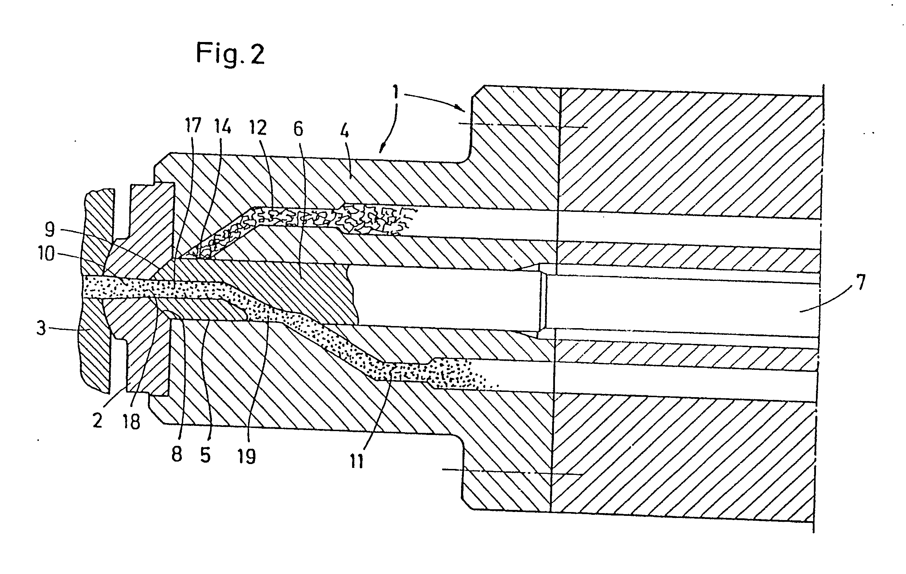

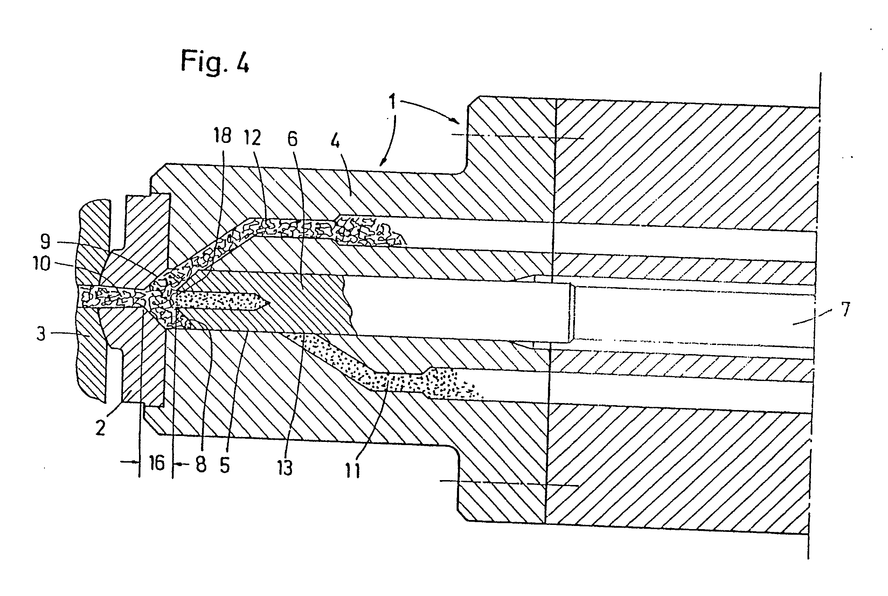

Das andere Ende des Verbindungskanals 17 ist unter einem vorgegebenen Neigungswinkel – von bspw. 30 bis 40° – radial zum Umfang der Schließnadel 6 geführt und bildet dort eine Umfangsöffnung 19, deren axiale Ausdehnung 20 größer bemessen ist als die axiale Ausdehnung der Austrittsöffnung 13 am zugehörigen Zuführkanal 11. Bewährt hat es sich, wenn die axiale Ausdehnung 20 der radialen Umfangsöffnung 19 etwa doppelt so groß bemessen wird wie die axiale Ausdehnung der Austrittsöffnung 13 des Zuführkanals 11. Hierdurch kann sichergestellt werden, daß die Strömungsverbindung zwischen dem Zuführkanal 11 und dem Verbindungskanal 17 auch bei einer Axialverschiebung der Schließnadel 6 aufrechterhalten werden kann, wie das der Vergleich zwischen den Figuren 2 und 4 der Zeichnung deutlich macht.

Damit sich aber die Strömungsverbindung des Zuführkanals 11 zum Verbindungskanal 17 jederzeit auch unterbrechen läßt, ist die Schließnadel 6 nicht nur axial verschiebbar, sondern auch winkelverdrehbar im Gehäuse 4 bzw. im Hauptkanal 5 des Spritzkopfes 1 untergebracht. Das Ausmaß der Verdrehbarkeit der Schließnadel 6 kann dabei winkelbegrenzt werden, und zwar so, daß einerseits die radiale Umfangsöffnung 19 des Verbindungskanals 17 von der Austrittsöffnung 13 des Verbindungskanals 11 abgetrennt ist (Fig. 1, 3 und 6), während sie andererseits hiermit in Verbindung steht (Fig. 2, 4 und 5).

Ein Verdrehwinkel von bspw. 90° dürfte in den meisten Fällen ausreichen, um die Strömungsverbindung des Zuführkanals 11 mit dem Verbindungskanal 17 herbeizuführen und zu unterbrechen.

Im einfachsten Falle werden Axialverschiebung und Winkeldrehung der Schließnadel 6 unabhängig voneinander über getrennte Antriebe herbeigeführt und gesteuert. Hierbei wäre es dann bedarfsweise möglich, Translations- und Rotationsbewegung der Schließnadel 6 wahlweise gleichzeitig oder zueinander zeitversetzt auszuführen.

Allerdings besteht auch ohne weiteres die Möglichkeit, die Translations- und Rotationsbewegung der Schließnadel 6 miteinander zu koppeln und dadurch in vorgegebenen Abhängigkeitsverhältnissen auszusteuern. Hierzu können ohne weiteres Kurven- bzw. Kulissentriebe eingesetzt werden, die sich dann auf unterschiedliche Bedarfsfälle abstimmen lassen.

Denkbar wäre es allerdings auch, die Schließnadel 6 lediglich axial verschiebbar im Gehäuse 4 des Spritzkopfes 1 vorzusehen und sie mit einer Hülse zu umgeben, die winkelverdrehbar, jedoch axial unverschiebbar im Gehäuse 4 des Spritzkopfes 1 gehalten wird. In diese Hülse wäre dabei dann die radiale Umfangsöffnung 19 mit der axialen Ausdehnung 20 eingearbeitet, welche je nach ihrer Winkeldrehlage, die Strömungsverbindung zwischen dem Zuführkanal 11 und dem Verbindungskanal 17 herstellt oder unterbricht.

Bei dem aus der Zeichnung ersichtlichen Spritzkopf 1 dient der Zuführkanal 11 im Gehäuse 4 zusammen mit dem Verbindungskanal 17 in der Schließnadel 6 zur Zuführung der treibmittelfreien Kunststoffschmelze, während durch den Zuführkanal 12 die treibmittelhaltige Kunststoffschmelze an den Hauptkanal 5 herangeführt wird.

Bei der aus Fig. 1 ersichtlichen Betätigungsstellung des Spritzkopfes, nämlich in der geschlossenen Grundstellung der Schließnadel 6, gelangen die beiden Schmelzeströme durch die Zuführkanäle 11 und 12 lediglich bis an den Umfang der Schließnadel 6 heran. Sie können also weder in den Hauptkanal 5 noch in das Düsenmundstück 2 gelangen. Bei der aus Fig. 2 ersichtlichen Bedienstellung befindet sich die Schließnadel 6 zwar noch in ihrer vorgeschobenen Schließstellung. Sie wurde jedoch in Umfangsrichtung so gedreht, daß die Austrittsöffnung 13 des Zuführkanals 11 über die radiale Umfangsöffnung 19 mit dem Verbindungskanal 17 in der Schließnadel 6 korrespondiert. Die im Zuführkanal 11 anstehende treibmittelfreie Kunststoffmasse kann daher nun durch den Verbindungskanal 17 und die Ausspritzöffnung 10 des Düsenmundstücks 2 in die Form gelangen.

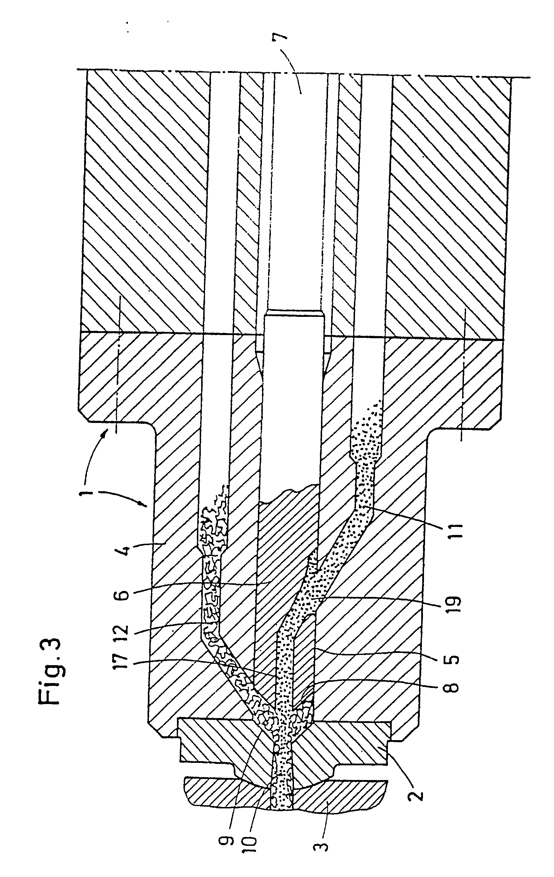

Sobald eine gewisse Menge an treibmittelfreier Kunststoffmasse in die Form gelangt ist, wird die Schließnadel 6 aus ihrer der Fig. 2 entsprechenden Stellung axial in die Stellung nach Fig. 3 zurückgefahren. Hierdurch wird dann die Austrittsöffnung 14 des Zuführkanals 12 in den Hauptkanal 5 freigegeben und zugleich auch die Mündungsöffnung 18 des Verbindungskanals 17 von der Ausspritzöffnung 10 des Düsenmundstücks 2 weg in den Hauptkanal 10 zurückgezogen. Es findet dann die gleichzeitige Zufuhr von treibmittelfreier Kunststoffmasse und treibmittelhaltiger Kunststoffmasse durch den Hauptkanal 5 in die Anspritzöffnung 10 des Düsenmundstücks 2 statt.

Nunmehr wird die Schließnadel 6 in ihrer aus Fig. 3 ersichtlichen Axialstellung um ihre Längsachse in die Grundstellung zurückgedreht, so daß die Austrittsöffnung 13 des Zuführkanals 11 außer Strömungsverbindung mit der radialen Umfangsöffnung 19 des Verbindungskanals 17 kommt. Die Zufuhr von treibmittelfreier Kunststoffmasse wird hierdurch unterbrochen, so daß nunmehr lediglich treibmittelhaltige Kunststoffmasse aus dem Zuführkanal 12 in den Hauptkanal 5 und von dort aus durch die Ausspritzöffnung 10 des Düsenmundstücks 2 in die Form gelangt.

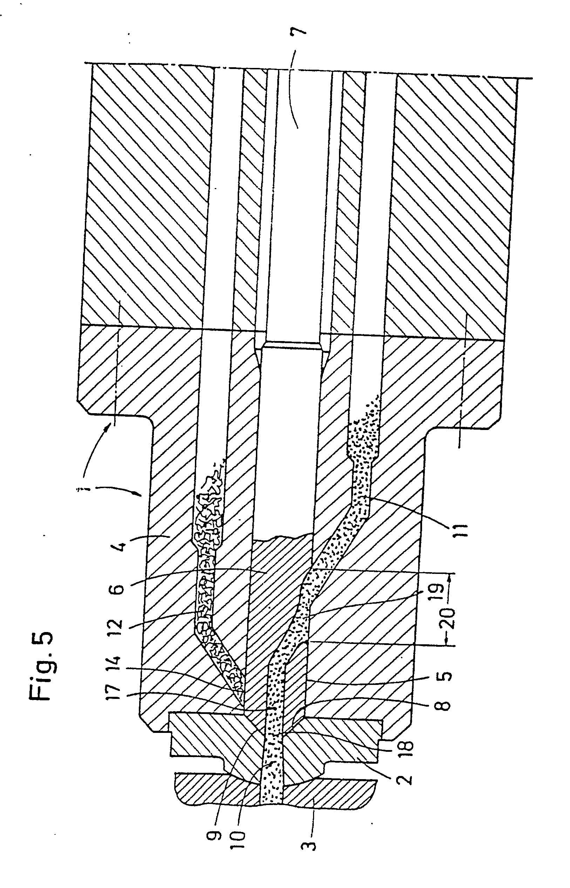

Sobald die gewünschte bzw. erforderliche Menge der treibmittelhaltigen Kunststoffmasse in die Form gelangt ist, wird die Schließnadel 6 aus der Stellung nach Fig. 4 sowohl verdreht als auch axial verschoben, so daß sich zunächst wieder ein Betriebszustand entsprechend der Fig. 3 und dann ein solcher entsprechend der Fig. 5 einstellt. Mit der treibmittelfreien Kunststoffmasse wird dabei in der Schaltstellung nach Fig. 5 der erforderliche Nachdruck auf das in der Form befindliche Kunststoff-Formteil ausgeübt, so daß der Formhohlraum seine optimale Füllung erhält. Gleichzeitig wird die im Düsenmundstück 2 bzw. in dessen Ausspritzöffnung 10 befindliche, treibmittelhaltige Kunststoffmasse herausgespült, so daß der Spritzkopf für den nächsten Schuß vorbereitet ist.

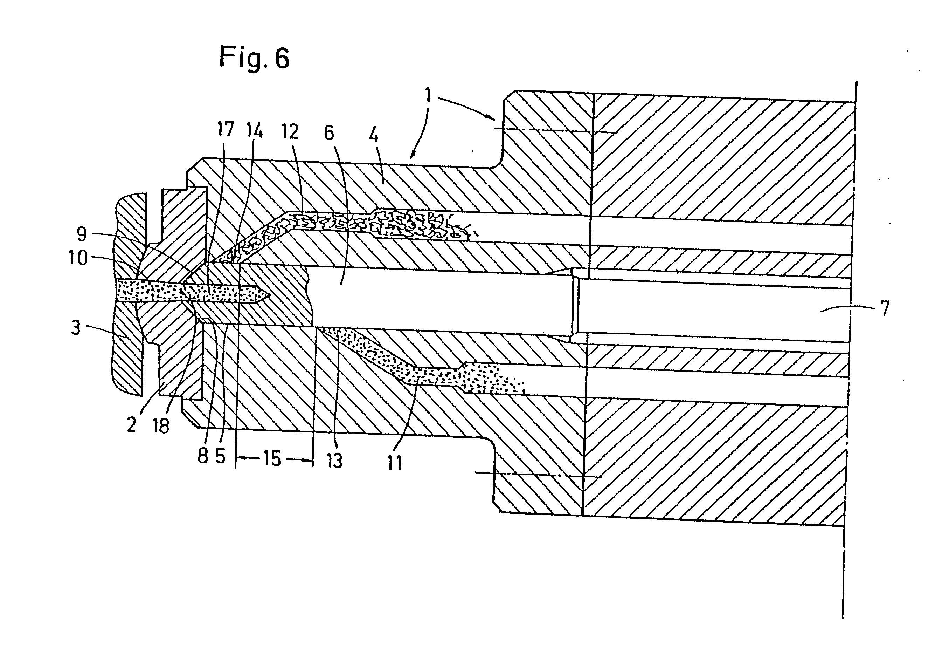

Nunmehr wird die Schließnadel 6 in die Stellung gemäß Fig. 6 gedreht, so daß die Funktionsstellung nach Fig. 1 wieder erreicht ist.

Nach Ablauf der Kühlzeit kann dann die Form geöffnet und das Formteil aus ihr herausgenommen werden.

Es sei noch darauf hingewiesen, daß die Funktionsstellungen nach den Fig. 1 und 6 in manchen Fällen nicht benötigt werden. Dies ist bspw. immer dann der Fall, wenn mit ständig geöffneter Düse für treibmittelfreie Kunststoffmasse gearbeitet wird. In diesem Falle nimmt dann der Spritzkopf 1 lediglich Arbeitspositionen entsprechend den Fig. 2, 3 und 5 der Zeichnung ein.

Für Kunststoff-Formkörper mit einer Außenhaut und einem Kern wird vorzugsweise für die Außenhaut ein treibmittelfreier Kunststoff verwendet, der eine glatte, kompakte Umhüllung des Kerns gewährleistet, für den in der Regel ein treibmittelhaltiger Kunststoff benutzt wird, um eine porige Struktur zu erzielen. Es ist aber, falls dies aus bestimmten Gründen erwünscht ist, auch die umgekehrte Kunststoffgruppierung oder bspw. der Einsatz zweier treibmittelfreier oder -haltiger Kunststoffe möglich.

Die Erfindung ist nicht auf eine Vorrichtung beschränkt, bei der in dem Hauptkanal nur zwei Zuführkanäle münden. Bei entsprechender Modifikation des Spritzkopfes und der Schließnadel kann auch mit mehr als zwei Kunststoffen gearbeitet werden.

**Ansprüche**

1. Vorrichtung zur Herstellung von Kunststoff-Formkörpern mit einer Außenhaut vorzugsweise aus treibmittelfreiem Kunststoff und mit einem Kern, vorzugsweise porigen Kern aus treibmittelhaltigem Kunststoff, bestehend aus einem Spritskopf (1) mit einemin eine Ausspritzöffnung (10) übergehenden Hauptkanal (5), zwei mit axialem Abstand von der Ausspritzöffnung und voneinander sowie gegeneinander winkelversetzt in den Hauptkanal (5) mündenden Zuführkanälen (11, 12) für die beiden Kunststoffe sowie einer axial im Hauptkanal (5) verschiebbaren Schließnadel (6), mit der die beiden Zuführkanäle (11, 12) vom Hauptkanal (5) abtrennbar sind, wobei in der Schließnadel (6), mit derr die beiden Zuführkanäle (11, 12) vom Hauptkanal (5) abtrennbar sind, wobei in der Schließnadel (6) ein im wesentlichen in axialer Richtung verlaufender Verbindungskanal (17) angeordnet ist, der einerseits aus der Stirnfläche und andererseits radial zum entfernteren Führungskanal (11) hin aus dem Umfang der Schließnadel (6) herausführt, **dadurch gekennzeichnet**, daß die radiale Umfangsöffnung (19) des Verbindungskanals (17) sowohl in der geschlossenen Axialstellung (Fig. 1, 2, 5 und 6) als auch in zumindest einer teilweise geöffneten Axialstellung (Fig. 3 und 4) der Schließnadel (12) auf etwa gleicher Höhe mit der inneren radialen Austrittsöffnung (13) des entfernteren Zuführkanals (11) liegt, und daß die Schließnadel (6) bzw. deren radiale Umfangsöffnung (19) in jeder Axialstellung um die Längsachse des Spritzkopfes (1) relativ zur Austrittsöffnung (13) winkelverdrehbar vorgesehen ist.

2. Vorrichtung nach Anspruch 1, **dadurch gekennzeichnet**, daß die axiale Ausdehnung (20) der radialen Umfangsöffnung (19) des Verbindungskanals (17) an der Schließnadel (6) etwa gleich dem Doppelten der axialen Ausdehnung der Austrittsöffnung (13) am zugehörigen Zuführkanal (11) bemessen ist.

3. Vorrichtung nach einem der Ansprüche 1 und 2, **dadurch gekennzeichnet**, daß der Verdrehwinkel der Schließnadel (6) im Spritzkopf (1) begrenzt ist.

4. Vorrichtung nach einem der Ansprüche 1 bis 3, **dadurch gekennzeichnet**, daß der Verbindungskanal (17) mit seiner radialen Umfangsöffnung (19) einstückig in die Schließnadel (6) eingearbeitet ist.

5. Vorrichtung nach einem der Ansprüche 1 und 2, **dadurch gekennzeichnet**, daß die radiale Umfangsöffnung (19) für den Verbindungskanal (17) sich in einer Hülse befindet, die die Schließnadel (6) an ihrem Umfang verdrehbar uumfaßt.

6. Vorrichtung nach einem der Ansprüche 1 bis 5, **dadurch gekennzeichnet**, daß der axiale Abstand (15) zwischen den Mündungen (13 und 14) der beiden Zuführkanäle (11 und 12) in den Hauptkanal (5) etwa doppelt so groß bemessen ist, wie die axiale Ausdehnung der Mündungen (13 und 14) dieser Zuführkanäle (11 und 12).

7. Vorrichtung nach einem der Ansprüche 1 bis 4 und 6, **dadurch gekennzeichnet**, daß Translations- und Rotationsbewegung der Schließnadel (6) wahlweise gleichzeitig oder zueinander zeitversetzt ausführbar sind.

8. Vorrichtung nach einem der Ansprüche 1 bis 4 und 6, **dadurch gekennzeichnet**, daß Translations- und Rotationsbewegung der Schließnadel (6) miteinander gekoppelt bzw. koppelbar sind.

9. Vorrichtung nach einem der Ansprüche 1, 2, 5 und 6, **dadurch gekennzeichnet**, daß die Schließnadel (6) lediglich axial verschiebbar und die Hülse lediglich begrenzt winkelverdrehbar im Gehäuse (4) des Spritzkopfs (1) angeordnet sind.

## Claims

1. Device for the production of moulded bodies of synthetic material with an outer skin preferably of synthetic material free of blowing agent and with a core which is preferably porous and of synthetic material containing blowing agent, the device consisting of an injection head (1) with a main channel (5) passing over into an ejection opening (10), two feed channels (11, 12), which open into the main channel (5) at an axial spacing from the ejection opening and are angularly displaced each from and relative to the other, for both the synthetic materials as well as with a closure needle (6), which is displaceable axially in the main channel (5) and by which both the feed channels (11, 12) are separable from the main channel (5), wherein a connecting channel (17), which extends substantially in axial direction, is arranged in the closure needle (6) and leads out on the one hand from the end face and on the other hand radially of the more remote feed channel (11) from the circumference of the closure needle (6), characterised thereby, that the radial circumferential opening (19) of the connecting channel (17) in the closed axial setting (Figures 1, 2, 5 and 6) as well as also in an at least partially opened axial setting (Figures 3 and 4) of the closure needle (6) lies at about the same height as the inner radial exit opening (13) of the more remote feed channel (11) and that the closure needle (6) or its radial circumferential opening (19) is provided to be angularly rotatable relative to the exit opening (13) about the longitudinal axis of the injection head (1) in every axial setting.

2. Device according to claim 1, characterised thereby, that the axial extent (20) of the radial circumferential opening (19) of the connecting channel (17) at the closure needle (6) is dimensioned to be about equal to twice the axial extent of the exit opening (13) at the associated feed channel (11).

3. Device according to one of the claims 1 and 2, characterised thereby, that the angle of rotation of the closure needle (6) in the injection head (1) is limited.

4. Device according to one of the claims 1 to 3, characterised thereby, that the connecting channel (17) with its radial circumferential opening (19) is machined integrally into the closure needle (6).

5. Device according to one of the claims 1 and 2, characterised thereby, that the radial circumferential opening (19) for the connecting channel (17) is situated in a sleeve which rotatably encompasses the closure needle (6) at its circumference.

6. Device according to one of the claims 1 to 5, characterised thereby, that the axial spacing (15) between the mouths (13 and 14) of both the feed channels (11 and 12) into the main channel (5) is dimensioned to be about twice as great as the axial extent of the mouths (13 and 14) of these feed channels (11 and 12).

7. Device according to one of the claims 1 to 4 and 6, characterised thereby, that translatory and rotary movements of the closure needle (6) are selectably performable at the same time or each displaced relative to the other in time.

8. Device according to one of the claims 1 to 4 and 6, characterised thereby, that translatory and rotary movements of the closure needle (6) are one coupled or couplable with the other.

9. Device according to one of the claims 1, 2, 5 and 6, characterised thereby, that the closure needle (6) is merely axially displaceable and the sleeve is arranged to be merely limitedly displaceable angularly in the housing (4) of the injection head (1).

## Revendications

1. Appareil pour la fabrication de corps moulés en matière plastique qui comportent une couche superficielle extérieure constituée de préférence par une matière plastique ne contenant pas de produit d'expansion et un noyau, de préférence poreux, constitué par une matière plastique contenant un produit d'expansion, constitué par une tête d'injection (1) qui comporte un conduit principal (5) aboutissant à un orifice d'injection (10) débouchant à l'extérieur, deux conduits (11, 12) qui, débouchent dans le conduit principal (5), y amènent les deux matières plastiques, sont situés chacun à une certaine distance, dans le sens axial, de l'orifice d'injection et sont orientés dans des directions angulaires différentes, ainsi que par une aiguille de fermeture (6) qui peut se déplacer dans le sens axial dans le conduit principal (5) et qui peut isoler les deux conduits d'amenée (11, 12) du conduit principal (5), cette aiguille de fermeture (6) comportant un conduit de liaison (17) qui, d'un côté, part de la surface frontale et, de l'autre côté, se dirige dans le sens radial vers le conduit d'amenée (11) le plus éloigné pour déboucher au niveau de la périphérie de l'aiguille de fermeture (6), caractérisé en ce qu'aussi bien dans la position axiale de fermeture (Figures 1, 2, 5 et 6) que dans la position axiale d'ouverture partielle (Figures 3 et 4) de l'aiguille de fermeture (12), l'orifice périphérique radial (19) du conduit de liaison (17) se trouve à peu près à la même hauteur que l'orifice de sortie radial intérieur (13) du conduit d'amenée (11) le plus éloigné et en ce que, dans chacune des positions axiales, l'aiguille de fermeture (6) ou son orifice périphérique radial (19) peut tourner d'un certain angle, par rapport à l'orifice de sortie (13), autour de l'axe longitudinal de la tête d'injection (1).

2. Appareil selon la revendication 1, caractérisé en ce que la dimension axiale (20) de l'orifice périphérique (19) du conduit de liaison (17) de l'aiguille de fermeture (6) est sensiblement le double de la dimension axiale de l'orifice de sortie (13) du conduit d'amenée correspondant (11).

3. Appareil selon l'une des revendications 1 ou 2, caractérisé en ce que l'angle de rotation de l'aiguille de fermeture (6) dans la tête d'injection (1) est limité.

4. Appareil selon une des revendications 1 à 3, caractérisé en ce que le conduit de liaison (17) et son orifice périphérique radial (19) sont réalisés d'une seule pièce dans l'aiguille de fermeture (6).

5. Appareil selon l'une des revendications 1 ou 2, caractérisé en ce que l'orifice périphérique radial (19) du conduit de liaison (17) se trouve dans une douille qui entoure l'aiguille de fermeture (6) de manière à pouvoir tourner à sa surface.

6. Appareil selon une des revendications 1 à 5, caractérisé en ce que la distance (15) dans le sens axial entre les orifices d'arrivée (13 et 14) des deux conduits d'amenée (11 et 12) dans le conduit principal est sensiblement le double de la dimension axiale des orifices d'arrivée (13 et 14) de ces conduits d'amenée (11 et 12).

7. Appareil selon une des revendications 1 à 4 et 6, caractérisé en ce que les mouvements de translation et de rotation de l'aiguille de fermeture (6) peuvent à volonté s'effectuer simultanément ou avec un certain décalage chronologique l'un par rapport à l'autre.

8. Appareil selon une des revendications 1 à 4 et 6, caractérisé en ce que les mouvements de translation et de rotation de l'aiguille de fermeture (6) sont accouplés ou peuvent être accouplés.

9. Appareil selon une des revendications 1, 2, 5 et 6, caractérisé en ce que l'aiguille de fermeture (6) ne peut se déplacer que dans le sens axial et que la douille ne peut se déplacer que d'un angle limité dans l'enveloppe (4) de la tête d'injection (1).

Fig. 1

Fig. 2

# Fig. 3

# Fig. 4

EP 0 261 350 B1

# Fig. 5

EP 0 261 350 B1

Fig. 6

EP 0 261 350 B1